# EUROPEAN PATENT SPECIFICATION

(11) **EP 2 269 447 B1**
(45) Date of publication and mention of the grant of the patent: **27.03.2013**
(21) Application number: 10166700.4
(22) Date of filing: 21.06.2010
(51) Int. Cl.: A01K 69/08

(54) **Confinement enclosure**
Eingrenzungsbehälter
Enceinte de confinement

(30) Priority: 24.06.2009 GB 0910900; 30.10.2009 GB 0919023
(43) Date of publication of application: 05.01.2011
(73) Proprietor: Francis Ward Limited, Bradford Yorkshire BD4 8SJ (GB)
(72) Inventor: Wurr, Jonathan, Leeds, Yorkshire LS6 4SF (GB); Hinch, Jason, Maltby, Yorkshire S66 8SL (GB)
(74) Representative: Stuttard, Garry Philip

(56) References cited:
- US-A- 3 826 032
- US-A- 4 258 496

## Description

The present invention relates to a confinement enclosure for a marine entrapment assembly, to a marine entrapment assembly for capturing marine creatures (such as crustaceans (*eg* crabs and lobsters) and fish) comprising the confinement enclosure and to a moulding tool comprising a mould cavity shaped to manufacture the confinement enclosure.

A conventional entrapment assembly for capturing crabs and lobsters comprises a framework to which is attached meshing. Typically the framework is made from plastic, steel, wire or a more traditional material such as wood, willow or hazel and may comprise bars, rods, struts or tubes. One such assembly is described in GB-A-2350042. US patent 4,258,496 describes an enclosure as per the preamble of claim 1.

Another conventional marine entrapment assembly comprises a number of injection moulded panels tied together and provided with cut out holes.

Conventional entrapment assemblies have a number of drawbacks. For example, metal versions subjected to harsh marine environments are prone to rust. Multiple part frameworks lack strength and are time consuming to manufacture and repair. Meshing attached to the framework is largely prominent from the outermost surface of the framework and is therefore prone to rubbing and dislodgement.

The present invention seeks to address certain drawbacks of marine entrapment assemblies by exploiting a confinement enclosure with a one-piece moulded housing.

Thus according to claim 1 the present invention provides a confinement enclosure for a marine entrapment assembly comprising (or consisting essentially of or consisting of): a one-piece moulded housing which is perforated and adapted to attach reticulated confinement material, wherein the one-piece moulded housing comprises a floor, a ceiling, a proximal end, a distal end and opposed first and second side walls optionally equipped with one or more side windows, wherein one or both of the ceiling and the plurality of side windows includes one or more entrance windows for marine creatures and wherein one or both of the distal end and the plurality of side windows includes one or more access windows for access to an interior confinement space defined by the housing, wherein the floor is equipped with a plurality of elongate moulded lugs extending substantially from the proximal end to the distal end and the ceiling is equipped with a plurality of elongate moulded grooves extending substantially from the proximal end to the distal end such that when a first confinement enclosure and a second confinement enclosure are vertically stacked into a stack the lugs engage the grooves to laterally restrain the stack and wherein the surface of the one-piece moulded housing has internal parts adapted for the exclusively non-protuberant attachment of reticulated confinement material.

By incorporating a one-piece moulded housing, the confinement enclosure offers improvements *inter alia* in robustness and strength and is straightforward to manufacture.

The profile of the one-piece moulded housing may be substantially semi-polygonal. For example, the profile of the one-piece moulded housing may be substantially semi-hexagonal, semi-octagonal or semi-dodecagonal. Preferably the one-piece moulded housing is semi-octagonal.

The one-piece moulded housing may be box-like (eg substantially cuboidal or cubic). The one-piece moulded housing is typically elongate. The one-piece moulded housing may resemble a barrel vault.

The (or each) entrance window may be suitably sized to exclude (if desired) undesirably large marine creatures.

Preferably the one or more entrance windows for marine creatures include an entrance window near to the proximal end.

Preferably the one or more access windows include an access window near to the distal end. The access windows may be used to access the confinement space for retrieving a catch or for attaching reticulated material.

Each of the distal end and proximal end may be independently closed, perforated or open. Typically the proximal end is perforated. The distal end may be open or perforated.

The ceiling may be substantially planar, arched (*eg* substantially semi-cylindrical or hemispherical) or vaulted. Typically the ceiling is at least partially (*eg* substantially fully or fully) perforated (*eg* substantially uniformly perforated).

The ceiling may include an entrance window for marine creatures. The entrance window may be near to the proximal end.

The floor may be substantially planar. Typically the floor is at least partially (*eg* substantially fully or fully) perforated (*eg* substantially uniformly perforated).

Preferably the one piece moulded housing is equipped with one or more side windows. Particularly preferably the one piece moulded housing is equipped with a plurality of side windows.

Each side window may be independently closed, perforated or open.
Alternatively the door may be coupled (*eg* tied) or joined to the one-piece moulded housing (eg to the floor of the one-piece moulded housing).

Where the one-piece moulded housing and door are one-piece moulded, the door may be foldably joined to the one-piece moulded housing. This may be facilitated by a weakened (*eg* thinned or scored) portion of the one-piece mould between the door and one-piece moulded housing.

The confinement enclosure may further comprise a clasp for retaining the door in the closed position.

In a preferred embodiment, the one-piece moulded housing is equipped with escape gaps to allow undersized marine creatures or vermin to escape.

Typically the one-piece moulded housing is substantially regularly perforated. The perforations may be used to attach reticulated confinement material.

The perforations may be obtainable by piercing (*eg* drilling).

In a preferred embodiment, the one-piece moulded housing is an elongate, one-piece roto-moulded housing.

In a preferred embodiment, substantially the whole of (*eg* the whole of) the perforations are moulded perforations (preferably roto-moulded perforations). This serves to make the one-piece moulded housing strong and able to withstand harsh marine environments.

Confinement enclosures of the invention are adapted to be mutually vertically stackable.

The ceiling and floor are provided with complementary female and male moulded discontinuities which when a first confinement enclosure and a second confinement enclosure are vertically stacked into a stack are engaged to laterally restrain the stack.

By providing complementary female and male elongate moulded discontinuities, there is a reduced tendency for a stack to dislodge and present a safety hazard (especially in extreme marine conditions).

The moulded lugs extend substantially from the proximal end to the distal end. More particularly preferably the moulded lugs are fitted with elongate weighed ballasts. The elongate weighted ballasts (*eg* steel bars) serve to enhance the stability of the confinement enclosure.

The surface of the one-piece moulded housing has internal parts adapted for the exclusively non-protuberant attachment of reticulated confinement material. By being below the outermost exterior surface of the one-piece moulded housing, the reticulated confinement material is not prone to rubbing and dislodgement.

The parts of the surface adapted for the non-protuberant attachment of reticulated confinement material may be pierced (*eg* drilled).

Preferably the one-piece moulded housing has one or more inwardly extending discontinuities for the non-protuberant attachment of reticulated confinement material. Each of the one or more inwardly extending discontinuities may be a rib, pocket or well.

Preferably the discontinuity is an internal circumferential rib for the non-protuberant attachment of reticulated confinement material. The internal circumferential rib serves to increase the vertical loading capacity of the confinement enclosure. The internal circumferential rib may be substantially V-shaped. Preferably the internal circumferential rib extends largely around (preferably fully around) the circumference of the one-piece moulded housing.

Preferably the one-piece moulded housing has internal prominences for the attachment of a bait retainer. The internal prominences may be a pair of substantially diametrically opposed internal prominences (*eg* on the ceiling and floor respectively). The internal prominences may be internal boxes (*eg* internal square boxes) or pockets. The bait retainer may be a bait retaining rope. By being attached internally, the bait retainer is not prone to rubbing and dislodgement.

Viewed from a further aspect the present invention provides a marine entrapment assembly comprising:
a confinement enclosure as hereinbefore defined; and
reticulated confinement material attached to parts of the surface of the one-piece moulded housing.

The marine entrapment assembly may generally take the form of a trap, pot or creel and may be used for entrapping marine creatures such as shellfish, fish, crabs, lobsters, crawfish and prawns. In an embodiment of the invention, the marine entrapment assembly is of a parlour pot-type or an ink well pot-type.

Suitable reticulated confinement material may be in the form of mesh or net. The reticulated confinement material may be synthetic, twine, rope or cane.

The reticulated confinement material is attached non-protuberantly (preferably exclusively non-protuberantly) to parts of the surface of the one-piece moulded housing.

The one-piece moulded housing (eg the floor of the one-piece moulded housing) in the marine entrapment assembly of the invention may be fitted externally with one or more resilient members. The (or each) resilient member gives the marine entrapment assembly the ability to withstand impact from foreign bodies. The resilient material may be rubber. The (or each) resilient member may be a resilient strip. The (or each) resilient member may be fitted externally substantially around the perimeter (eg the floor perimeter) of the one-piece moulded housing.

In a preferred embodiment of the marine entrapment assembly, the interior confinement space is compartmentalised into a baiting chamber adjacent to the entrance window (eg at or near to the proximal end) and an exit chamber adjacent to the access window. The baiting chamber may be provided with a bait container (eg bait bag).

Preferably the confinement space is compartmentalised into the baiting chamber and the exit chamber by a constriction member. The constriction member serves to constrict the passage between the baiting chamber and the exit chamber and prevent the return of entrapped marine creatures from the exit chamber to the baiting chamber. The constriction member may be a funnel. The constriction member may comprise an internal door.

In a preferred embodiment, the reticulated confinement material is attached to the one-piece moulded housing in the region of the baiting chamber only.

The or each access window may be fitted with a curtain of reticulated material which is attached to the one-piece moulded housing at the return surfaces.

The entrance window may be fitted with an insert. The insert may be one of a set of differently sized inserts. The insert may be separate to or integral with the one-piece moulded housing. For example, the one-piece moulded housing and insert may be one-piece moulded. Alternatively the insert may be coupled (eg tied) or joined to the one-piece moulded housing (eg to the ceiling of the one-piece moulded housing).

The insert may be substantially cylindrical. The insert may be fitted to the entrance window substantially perpendicularly to the axis of the one-piece moulded housing. The (or each) end of the substantially cylindrical insert may terminate in a lip (eg an outwardly extending lip). The lip may be convex or outwardly curved.

Viewed from a yet further aspect the present invention provides a moulding tool comprising a mould cavity shaped to manufacture a confinement enclosure as hereinbefore defined.

Preferably the moulding tool is a roto-moulding tool.

The present invention will now be described in a non-limitative sense with reference to the accompanying Figures in which:
Figure 1 illustrates a first embodiment of the confinement enclosure of the invention;
Figure 2 illustrates a conventional marine entrapment assembly for explanatory purposes only;
Figure 3 illustrates a second embodiment of the confinement enclosure of the invention;
Figures 4a-4e are partial schematic views of a third embodiment of the confinement enclosure of the invention; and
Figures 5a and 5b are schematic views of a fourth embodiment of the confinement enclosure of the invention.

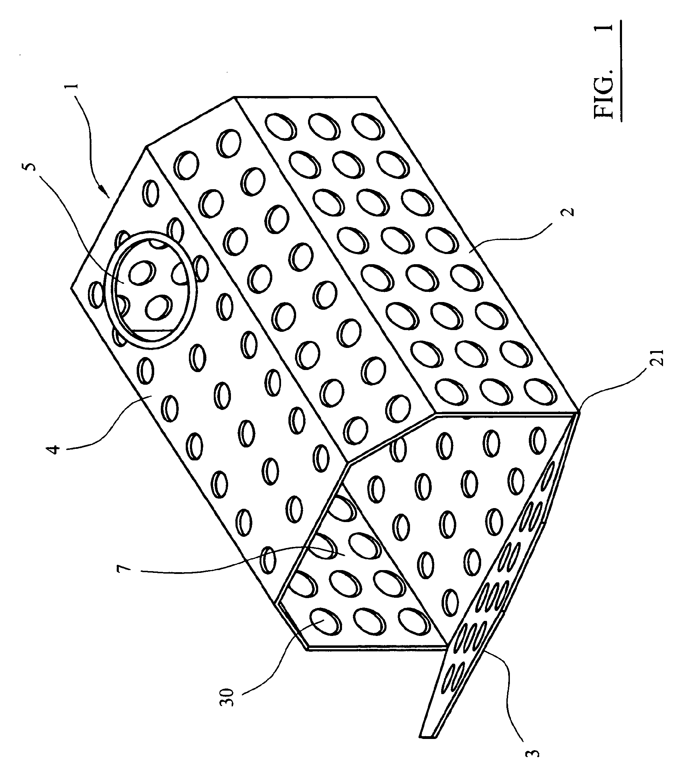

Figure 1 illustrates a first embodiment of the confinement enclosure of the invention designated generally by reference numeral 1. The confinement enclosure 1 comprises a one-piece moulded housing 2 having a substantially semi-octagonal profile and a door 3. The one-piece moulded housing 2 defines an interior confinement space. The one-piece moulded housing 2 and door 3 in this embodiment are uniformly perforated with holes 30.

A ceiling 4 of the one-piece moulded housing 2 is equipped near to a proximal end with an entrance window 5 for marine creatures.

The door 3 is pivotally mounted to an edge of a floor 21 of the one-piece moulded housing 2. In Figure 1, the door 3 is shown in an open position which leaves open a distal end face 7 of the one-piece moulded housing 2 which serves as an access window for access to the interior confinement space to permit retrieval of entrapped marine creatures.

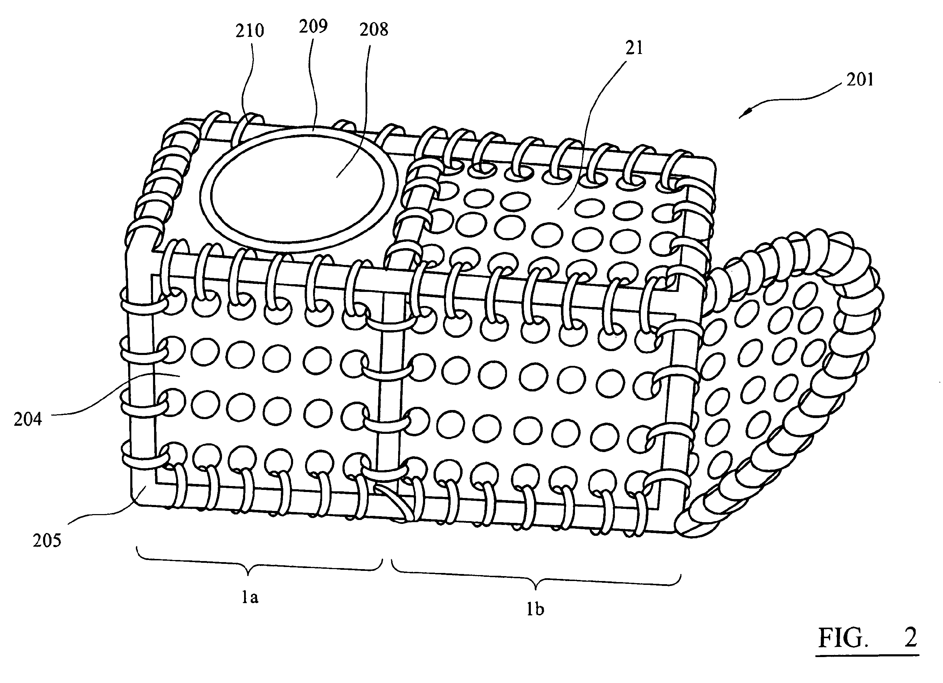

A conventional marine entrapment assembly 201 is illustrated in Figure 2 for explanatory purposes only. A conventional confinement enclosure 21 is defined by multiple moulded panels and a door. A confinement enclosure of the invention (for example the one designated by reference numeral 1 in Figure 1) may be deployed in place of the conventional confinement enclosure 21 to produce an embodiment of the marine entrapment assembly of the invention. In such an embodiment, the confinement space defined by the confinement enclosure 1 would be divided into a baiting chamber 1a at a proximal end and an exit chamber 1b at a distal end. The baiting chamber 1a would be fitted with netting 204 to prevent escape of entrapped marine creatures. The netting 204 would be wound around the holes 30 of the one-piece moulded housing 2. Between the baiting chamber 1a and the exit chamber 1b, there would be an internal funnel to prevent entrapped marine creatures from returning to the baiting chamber 1a from the exit chamber 1b.

The entrance 5 would be lined with an insert 208 which terminates in a rounded lip 209. The insert would be fastened by ties 210 and line the entrance 5 substantially perpendicularly to the axis of the one-piece moulded housing 2. In order to be able to withstand impact from foreign bodies, the perimeter of the floor 21 of the one-piece moulded housing 2 would be fitted with rubber impact strips 205.

The one-piece moulded housing 2 of the confinement enclosure 1 of the invention is one-piece roto-moulded. It may be manufactured according to a process described below:
1. A moulding tool for moulding the one-piece moulded housing 2 for a marine entrapment assembly (as described above with reference to Figure 1) was manufactured from mild steel with PTFE inserts (40mm diameter). The moulding tool was constructed in eight pieces, namely a top piece (fitted with an air vent), a bottom piece and a first and second end piece (fitted with cylindrical PTFE rods to produce moulded holes 30), together with first and second upper side pieces and first and second lower side pieces to complete the semi-octagonal profile. There was also a 2mm thick cut line at the front end of the moulding tool to aid in cutting out the door 3.
2. The polymer specification was:
low to medium density polyethylene
density 934 kg/m³
melt flow rate 6.0 g/10min (see Table 1).
3. The moulding tool was bolted together (although clamps could equally be used to aid the operator and speed up the entire operation).
4. The moulding tool was bolted to a rotational moulding machine. The top lid was removed from the rotational moulding machine and the required amount of powder added to the mould cavity. The air vent was cleaned and a new piece of gauze inserted. The top lid was replaced and the rotational moulding machine put into operation.
5. When the operation was complete, the top piece and an end piece were removed from the moulding tool and the mould was removed. The mould was checked for any imperfections. A cut was made along the cut line to make the door 3 foldable relative to the one-piece moulded housing 2. The mould was de-flashed to ensure that it was in perfect condition.

**TABLE 1**

| **Product Ref:** | **Material Grade** | **Minimum Wall Thickness** | **Charge Weight** | **Re-Charge Weight** |
|---|---|---|---|---|
| Crab Pot | 6100011A | 4mm | 4 Kg | n/a |
| | 6100039A | | 2 Kg | |
| | | | | |

| **Boom Speed** | **Turntable Speed** | **Reverse Frequency** | **Cook Time** | **Re-Cook Time** |
|---|---|---|---|---|
| 5.5 | 4 | 3.9 | 17 Min | n/a |
| | | | | |

| **Oven Temp** | **Dwell Time** | **Air Cool Time** | **Water Cool Time** | **Ventura Time** |
|---|---|---|---|---|
| 280 | n/a | 12 Min | 7 Min | n/a |
| | | | | |
| **Mould Reference** | | FW | | |
| **Inlet Type** | | Crab Top Cover c/w air inlet | | |
| **Outlet Type** | | n/a | | |
| **Cooling Jig** | | n/a | | |
| **Accessories** | | n/a | | |

| **Inspections to be carried out** | | | | |
|---|---|---|---|---|
| **Type** | **Level of Inspection** | | **Frequency** | |
| Individual | As per requirements of the first | | At start of shift | |
| | off inspection sheet | | After product change | |
| | | | After change of settings | |
| | | | | |
| Visual & Thickness | Every product as per route card/ | | Every Unit Produced | |
| | quality procedure | | | |

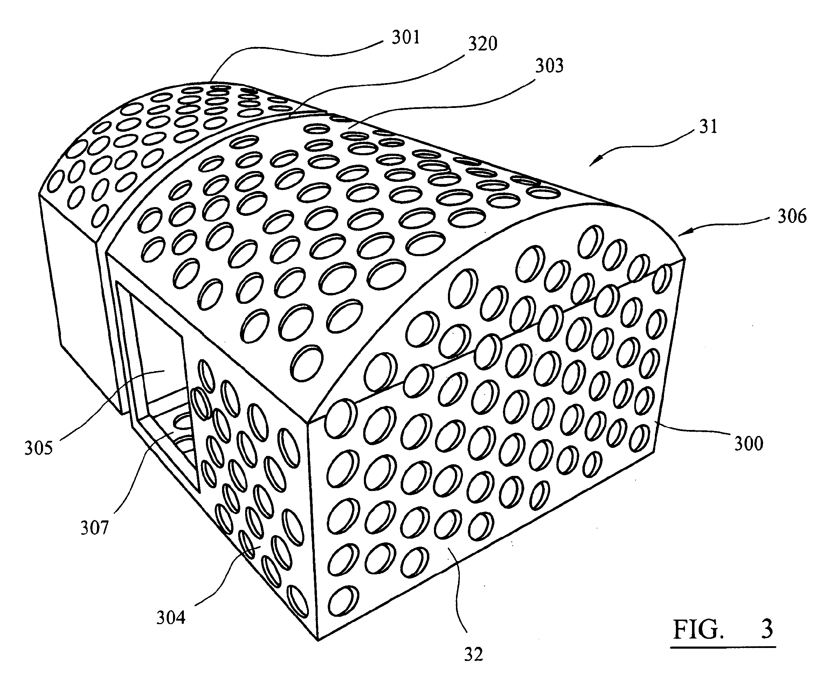

Figure 3 illustrates a second embodiment of the confinement enclosure of the invention designated generally by reference numeral 31. The confinement enclosure 31 comprises a one-piece moulded housing 32 having a profile which resembles a barrel vault. The one-piece moulded housing 32 defines an interior confinement space. The one-piece moulded housing 32 has an internal circumferential rib 320. A distal end 300, a proximal end 301, a ceiling 303 and a floor 304 of the one-piece moulded housing 32 are uniformly perforated with holes 30.

A first side wall 305 is equipped with an access window 307 for access to the interior confinement space to permit retrieval of entrapped marine creatures. A second side wall 306 opposite to the first side wall 305 is equipped near to the distal end 300 with an entrance window (unseen in Figure 3) for marine creatures.

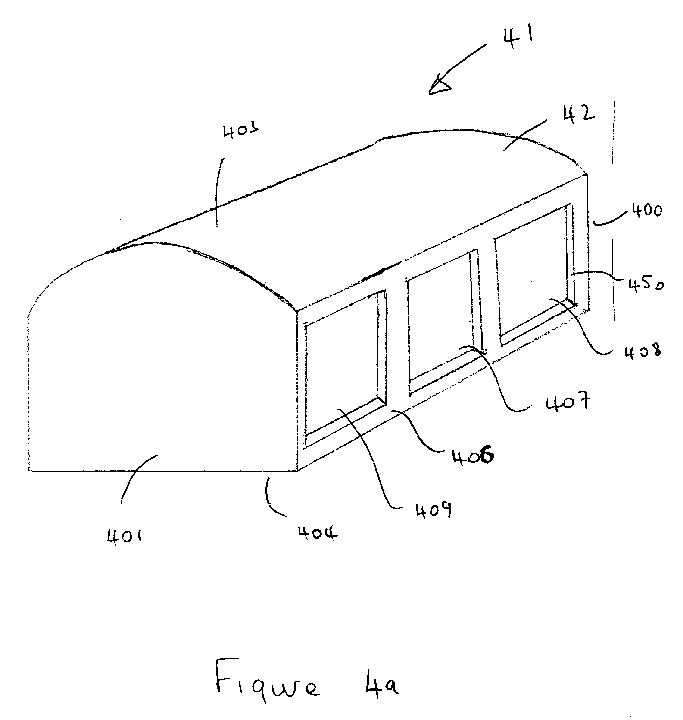

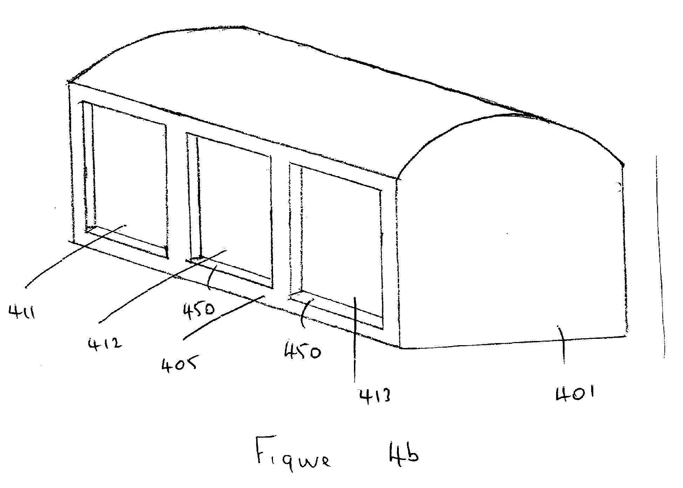

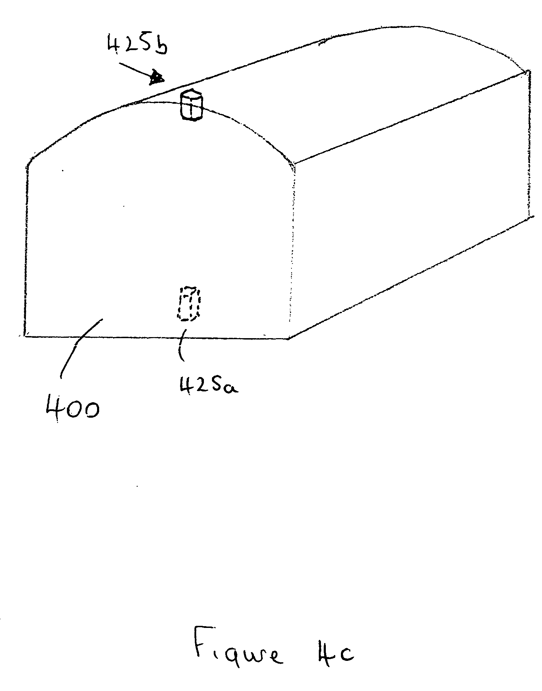

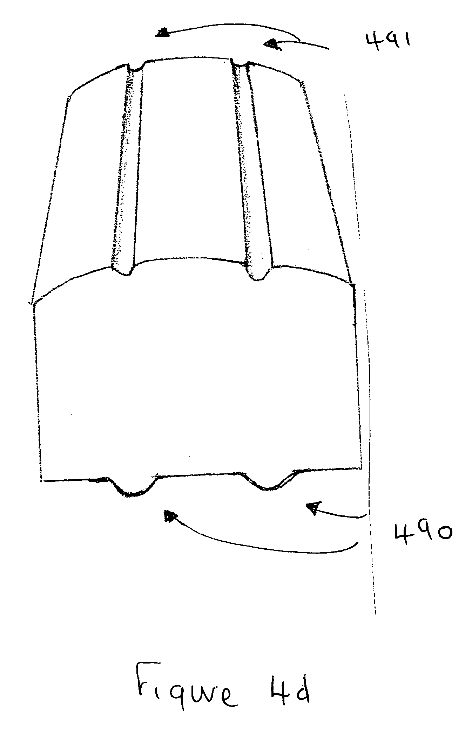

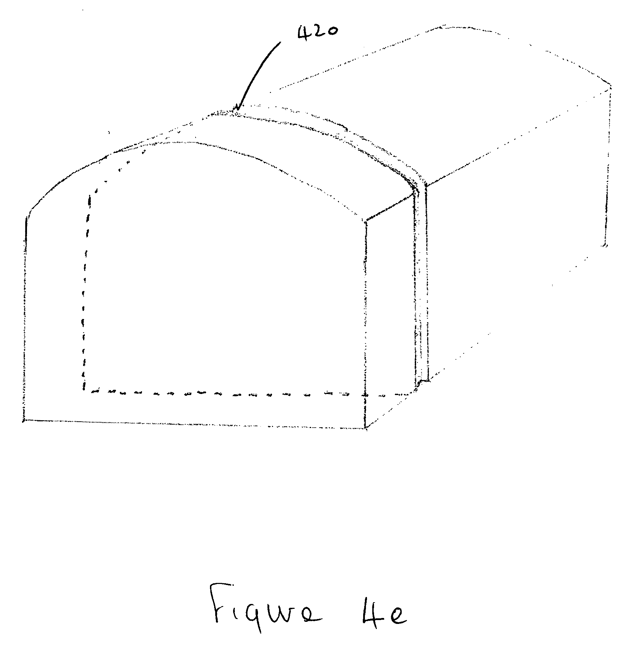

Figures 4a to 4e are partial schematic views of a third embodiment of the confinement enclosure of the invention designated generally by reference numeral 41. The confinement enclosure 41 comprises a one-piece moulded housing 42 having a profile which resembles a barrel vault. Detailed features such as perforations are omitted from Figures 4a-4e for clarity. The one-piece moulded housing 42 defines an interior confinement space. The one-piece moulded housing 42 has an internal circumferential rib 420 (see Figure 4e). The internal circumferential rib 420 allows netting to be fitted non-protruberantly in a recess so as to prevent abrasion. Although a proximal end 400, a distal end 401, a ceiling 403 and a floor 404 of the one-piece moulded housing 42 are uniformly perforated with holes, these and other surface features are omitted from Figures 4a-4e for clarity.

A first side wall 405 is equipped with access windows 412 and 413 for access to the interior confinement space and an entrance window 411 for marine creatures.

A second side wall 406 is equipped with an entrance window 407 for marine creatures and side windows 408 and 409 which are perforated. Each of the entrance windows 407 and 411, access windows 412 and 413 and side windows 408 and 409 is recessed with a substantially orthogonal return surface (450 for example).

Extending internally from the ceiling 403 and floor 404 respectively is a pair of substantially diametrically opposed square boxes 425a and 425b to which may be secured a bait retaining rope (not shown).

The floor 404 is equipped with parallel spaced apart moulded lugs 490 which extend from the proximal end 400 to the distal end 401. The ceiling 403 is equipped with parallel spaced apart moulded grooves 491 which extend from the proximal end 400 to the distal end 401. The moulded lugs 490 and moulded grooves 491 are complementarily shaped to permit mutual vertical stacking of multiple confinement enclosures 41.

The access windows 412 and 413 are used generally for access to the interior confinement space for the purposes of attaching reticulated material internally during the manufacture of a marine entrapment assembly. When the marine entrapment assembly is complete, the access windows 412 and 413 are generally closed by a curtain of reticulated material which is attached to the one-piece moulded housing 42 at the return surfaces 450.

By virtue of the attachment of reticulated material, the interior confinement space is compartmentalised into a baiting chamber adjacent to the entrance window 411 and an exit chamber adjacent to the access window 413 by a constriction funnel. The constriction funnel serves to constrict the passage between the baiting chamber and the exit chamber and prevent the return of entrapped marine creatures from the exit chamber to the baiting chamber.

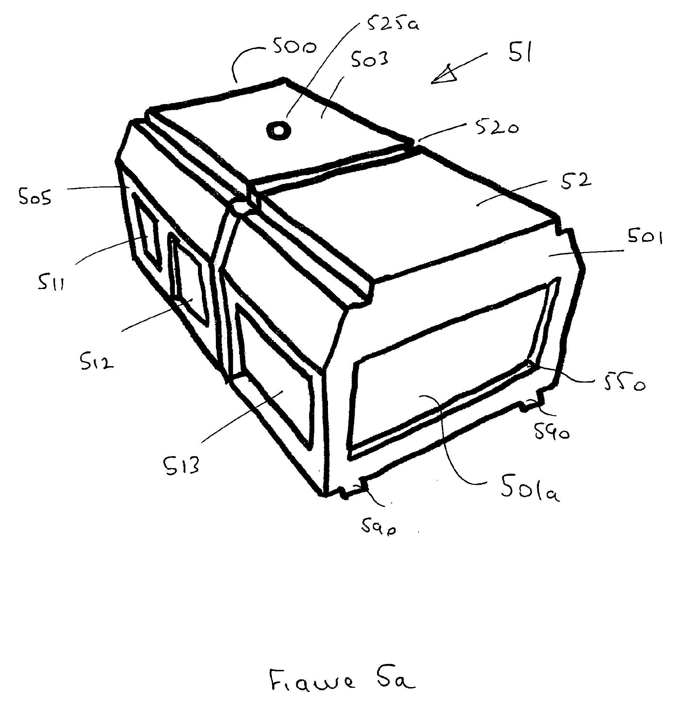

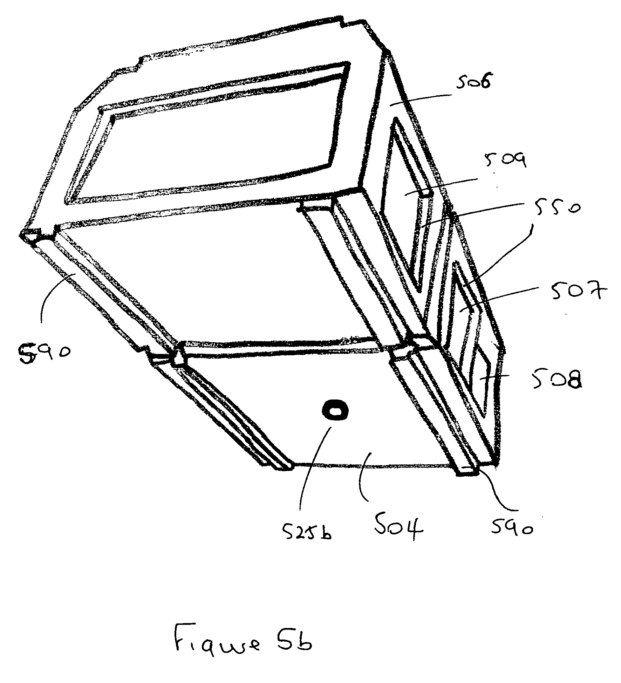

Figures 5a and 5b are partial schematic views of a fourth embodiment of the confinement enclosure of the invention designated generally by reference numeral 51. The confinement enclosure 51 comprises a one-piece moulded housing 52 having a profile which is substantially semi-octagonal. The one-piece moulded housing 52 defines an interior confinement space. The one-piece moulded housing 52 has an internal circumferential rib 520 (see Figure 5a) which is substantially V-shaped. The internal circumferential rib 520 allows netting to be fitted non-protruberantly in a recess so as to prevent abrasion. Although a proximal end 500, a distal end 501, a ceiling 503 and a floor 504 of the one-piece moulded housing 52 are uniformly perforated with holes, these and other surface features are omitted from Figures 5a and 5b for clarity. Nonetheless the surface is perforated with the exception of a part of the floor 504 which is solid.

A first side wall 505 is equipped with access windows 512 and 513 for access to the interior confinement space and an entrance window 511 for marine creatures.

A second side wall 506 is equipped with an entrance window 507 for marine creatures and side windows 508 and 509 which are perforated. Each of the entrance windows 507 and 511, access windows 512 and 513 and side windows 508 and 509 is recessed with a substantially orthogonal return surface (550 for example).

In the ceiling 503 and the floor 504 respectively is a pair of diametrically opposed pockets 525a and 525b to which may be secured non-protruberantly a bait retaining rope (not shown).

The floor 504 is equipped with a pair of parallel spaced apart moulded lugs 590 which extend from the proximal end 500 to the distal end 501. Inside the confinement enclosure 51, the moulded lugs 590 are hollow and able to receive and secure weighted ballasts. The ceiling 503 is equipped with a pair of parallel spaced apart moulded grooves 591 which extend from the proximal end 500 to the distal end 501 at the apex with the first side wall 505 and second side wall 506 respectively. The moulded lugs 590 and moulded grooves 591 are complementarily shaped to permit mutual vertical stacking of multiple confinement enclosures 51.

The access windows 512 and 513 and an access window 501 a in the distal end 501 are used generally for access to the interior confinement space for the purposes of attaching reticulated material internally during the manufacture of a marine entrapment assembly. The access window 512 is used for loading bait on the bait retaining rope. The access window 513 is used for retrieving catch. The distal end 501 may be cut away by the assembler to create the access window 501a. When the marine entrapment assembly is complete, the access windows 512 and 513 are generally closed by a curtain of reticulated material which is attached to the one-piece moulded housing 52 at the return surfaces 550. When the use of the window 501a to attach reticulated material internally is complete, the window 501a is closed by re-attaching the cutaway part of the distal end 501 with rope.

By virtue of the attachment of reticulated material, the interior confinement space is compartmentalised into a baiting chamber adjacent to the entrance window 511 and an exit chamber adjacent to the access window 513 by a constriction funnel. The constriction funnel serves to constrict the passage between the baiting chamber and the exit chamber and prevent the return of entrapped marine creatures from the exit chamber to the baiting chamber.

## Claims

1. A confinement enclosure (51) for a marine entrapment assembly comprising:
a one-piece moulded housing (52) which is perforated and adapted to attach reticulated confinement material, wherein the one-piece moulded housing comprises a floor (504), a ceiling (503), a proximal end (500), a distal end (501) and opposed first and second side walls (505, 506) optionally equipped with one or more side windows (507, 508, 509, 511, 512, 513), wherein one or both of the ceiling and the plurality of side windows includes one or more entrance windows (507, 511) for marine creatures and wherein one or both of the distal end and the plurality of side windows includes one or more access windows (512, 513) for access to an interior confinement space defined by the housing, **characterized in that**
the floor is equipped with a plurality of elongate moulded lugs (590) extending substantially from the proximal end to the distal end and the ceiling is equipped with a plurality of elongate moulded grooves (591) extending substantially from the proximal end to the distal end such that when a first confinement enclosure and a second confinement enclosure are vertically stacked into a stack the lugs engage the grooves to laterally restrain the stack and **in that** the surface of the one-piece moulded housing has internal parts adapted for the exclusively non-protuberant attachment of reticulated confinement material.

2. A confinement enclosure (51) as claimed in claim 1 wherein the profile of the one-piece moulded housing (52) is semi-octagonal.

3. A confinement enclosure (51) as claimed in claim 1 or 2 wherein the one piece moulded housing (52) is equipped with a plurality of side windows (507, 508, 509, 511, 512,513).

4. A confinement enclosure (51) as claimed in claim 3 wherein each side window (507, 508, 509, 511, 512, 513) is recessed with a substantially orthogonal return surface (550) for the non-protuberant attachment of reticulated confinement material.

5. A confinement enclosure (51) as claimed in claim 3 or 4 wherein the plurality of side windows (507, 508, 509, 511, 512, 513) includes a first entrance window (511) for marine creatures in the first side wall (505) non-diametrically opposed to a second entrance window (507) for marine creatures in the second side wall (506).

6. A confinement enclosure (51) as claimed in any of claims 3 to 5 wherein the plurality of side windows (507, 508, 509, 511, 512, 513) includes a first access window (512) in the first side wall (505) adjacent to a second access window (513) in the first side wall.

7. A confinement enclosure (51) as claimed in any preceding claim wherein the distal end (501) is open and includes an access window or is openable to include an access window.

8. A confinement enclosure (51) as claimed in any preceding claim wherein the one-piece moulded housing (52) has an internal circumferential rib (520) for the non-protuberant attachment of reticulated confinement material, wherein the internal circumferential rib extends around the circumference of the one-piece moulded housing.

9. A confinement enclosure (51) as claimed in any preceding claim wherein the one-piece moulded housing (52) has a pair of substantially diametrically opposed internal prominences (525a, 525b) for the attachment of a bait retainer.

10. A confinement enclosure (51) as claimed in any preceding claim wherein the surface of the one-piece moulded housing (52) is substantially regularly perforated.

11. A marine entrapment assembly comprising:
a confinement enclosure (51) as defined in any preceding claim; and
reticulated confinement material attached to parts of the surface of the one-piece moulded housing (52).

12. A moulding tool comprising a mould cavity shaped to manufacture a confinement enclosure (51) as defined in any of claims 1 to 10.

## Patentansprüche

1. Eingrenzungsbehälter (51) für eine marine Fangvorrichtung umfassend:
ein aus einem Stück geformtes Gehäuse (52), welches perforiert und zur Anbringung von netzartigem Eingrenzungsmaterial geeignet ist, wobei das aus einem Stück geformte Gehäuse einen Boden (504), eine Decke (503), ein proximales Ende (500), ein distales Ende (501)und einander gegenüberliegende, gegebenenfalls mit einem oder mehreren Seitenfenstern (507, 508, 509, 511, 512, 513) versehene, erste und zweite Seitenwände (505, 506) umfasst, wobei die Decke und/oder eines oder mehrere der Vielzahl von Seitenfenstern ein oder mehrere Eintrittsfenster (507, 511) für marine Lebewesen umfasst und wobei das distale Ende und/oder eines oder mehrere der Mehrzahl von Seitenfenstern eines oder mehrere Zugriffsfenster (512, 213) für den Zugriff auf einen durch den Behälter definierten eingegrenzten Innenraum umfasst, **dadurch gekennzeichnet, dass**
der Boden mit einer Vielzahl länglich geformter Ansätze (590), die sich im Wesentlichen von dem proximalen zu dem distalen Ende erstrecken, und die Decke mit einer Vielzahl länglich geformter Vertiefungen (591), die sich im Wesentlichen von dem proximalen zu dem distalen Ende erstrecken, ausgestattet sind, so dass beim vertikalen Stapeln eines ersten Eingrenzungsbehälters und eines zweiten Eingrenzungsbehälters in einen Stapel die Ansätze mit den Vertiefungen in Eingriff kommen, um so den Stapel seitlich festzuhalten, und dass die Fläche des aus einem Stück geformten Gehäuses Innenteile aufweist, die zur ausschließlich nicht ausbeulenden Befestigung eines netzartigen Eingrenzungsmaterials geeignet sind.

2. Eingrenzungsbehälter (51) nach Anspruch 1, wobei das Profil des aus einem Stück geformten Gehäuses (52) semioktogonal ist.

3. Eingrenzungsbehälter (51) nach Anspruch 1 oder 2, wobei das aus einem Stück geformte Gehäuse (52) mit einer Vielzahl von Seitenfenstern (507, 508, 509, 511, 512, 513) ausgestattet ist.

4. Eingrenzungsbehälter (51) nach Anspruch 3, wobei jedes Seitenfenster (507, 508, 509, 511, 512, 513) mit einer im Wesentlichen orthogonalen Rückführungsfläche (550) zur nicht ausbeulenden Befestigung netzartigen Eingrenzungsmaterials ausgespart ist.

5. Eingrenzungsbehälter (51) nach Anspruch 3 oder 4, wobei die Vielzahl von Seitenfenstern (507, 508, 509, 511, 512, 513) in der ersten Seitenwand (505) ein erstes Eintrittsfenster (511) für marine Lebewesen nicht diametral gegenüber eines zweiten Eintrittsfensters (507) für marine Lebewesen in der zweiten Seitenwand (506) umfasst.

6. Eingrenzungsbehälter (51) nach einem der Ansprüche 3 bis 5, wobei die Vielzahl von Seitenfenstern (507, 508, 509, 511, 512, 513) in der ersten Seitenwand (505) ein erstes Zugriffsfenster (512) neben einem zweiten Zugriffsfenster (513) in der ersten Seitenwand umfasst.

7. Eingrenzungsbehälter (51) nach einem der vorhergehenden Ansprüche, wobei das distale Ende (501) offen ist und ein Zugriffsfenster umfasst oder zu öffnen ist, um ein Zugriffsfenster aufzuweisen.

8. Eingrenzungsbehälter (51) nach einem der vorhergehenden Ansprüche, wobei das aus einem Stück geformte Gehäuse (52) eine innere Umfangsrippe (520) zur nicht ausbeulenden Befestigung eines netzartigen Eingrenzungsmaterials aufweist, wobei die innere Umfangsrippe sich um den Umfang des aus einem Stück geformten Gehäuses erstreckt.

9. Eingrenzungsbehälter (51) nach einem der vorhergehenden Ansprüche, wobei das aus einem Stück geformte Gehäuse (52) ein Paar im Wesentlichen diametral gegenüberliegender innerer Vorsprünge (525a, 525b) zur Befestigung einer Köderhalterung umfasst.

10. Eingrenzungsbehälter (51) nach einem der vorhergehenden Ansprüche, wobei die Fläche des aus einem Stück geformten Gehäuses(52) im Wesentlichen regelmäßig perforiert ist.

11. Marine Fangvorrichtung umfassend:
einen Eingrenzungsbehälter (51) nach einem der vorhergehenden Ansprüche, und
an Teilen der Fläche des aus einem Stück geformten Gehäuses (52) angebrachtes netzartiges Eingrenzungsmaterial.

12. Formwerkzeug umfassend einen Formhohlraum, der für die Herstellung eines Eingrenzungsbehälters (51) nach einem der Ansprüche 1 bis 10 geformt ist.

## Revendications

1. Enceinte de confinement (51) pour ensemble de piégeage marin comprenant :
un logement moulé d'une seule pièce (52) qui est perforé et conçu pour fixation d'un matériau de confinement réticulé, le logement moulé d'une seule pièce comprenant un plancher (504), un plafond (503), une extrémité proximale (500), une extrémité distale (501) et des première et seconde parois latérales opposées (505, 506) pourvues, facultativement, d'une ou de plusieurs fenêtres latérales (507, 508, 509, 511, 512, 513), l'un des éléments, ou les deux, parmi le plafond et la pluralité de fenêtres latérales comprenant une ou plusieurs fenêtres d'entrée (507, 511) pour des créatures marines et l'un des éléments, ou les deux, parmi l'extrémité distale et la pluralité de fenêtres latérales comprenant une ou plusieurs fenêtres d'accès (512, 513) pour accès à un espace de confinement intérieur délimité par le logement, **caractérisée en ce que** le plancher est équipé d'une pluralité d'ergots moulés allongés (590) s'étendant sensiblement de l'extrémité proximale à l'extrémité distale et le plafond étant pourvu d'une pluralité de gorges moulées allongées (591) s'étendant sensiblement de l'extrémité proximale à l'extrémité distale de manière que lorsqu'une première enceinte de confinement et une seconde enceinte de confinement sont empilées verticalement, les ergots s'engagent dans les gorges pour retenir latéralement la pile et **en ce que** la surface du logement moulé d'une seule pièce comporte des parties internes conçues pour la fixation exclusivement non protubérante de matériau de confinement réticulé.

2. Enceinte de confinement (51) selon la revendication 1, dans laquelle le profil du logement moulé d'une seule pièce (52) est semi-octogonal.

3. Enceinte de confinement (51) selon la revendication 1 ou 2, dans laquelle le logement moulé d'une seule pièce (52) est pourvu d'une pluralité de fenêtres latérales (507, 508, 509, 511, 512, 513).

4. Enceinte de confinement (51) selon la revendication 3, dans laquelle chaque fenêtre latérale (507, 508, 509, 511, 512, 513) est évidée, comportant une surface de retour sensiblement orthogonale (550) pour la fixation non protubérante de matériau de confinement réticulé.

5. Enceinte de confinement (51) selon la revendication 3 ou 4, dans laquelle la pluralité de fenêtres latérales (507, 508, 509, 511, 512, 513) comprend une première fenêtre d'entrée (511) pour des créatures marines dans la première paroi latérale (505) non diamétralement opposée à une seconde fenêtre d'entrée (507) pour des créatures marines dans la seconde paroi latérale (506).

6. Enceinte de confinement (51) selon l'une quelconque des revendications 3 à 5, dans laquelle la pluralité de fenêtres latérales (507, 508, 509, 511, 512, 513) comprend une première fenêtre d'accès (512) dans la première paroi latérale (505) adjacente à une seconde fenêtre d'accès (513) dans la première paroi latérale.

7. Enceinte de confinement (51) selon l'une quelconque des revendications précédentes, dans laquelle l'extrémité distale (501) est ouverte et comprend une fenêtre d'accès ou peut être ouverte pour inclure une fenêtre d'accès.

8. Enceinte de confinement (51) selon l'une quelconque des revendications précédentes, dans laquelle le logement moulé d'une seule pièce (52) comporte une nervure circonférentielle interne (520) pour la fixation non protubérante de matériau de confinement réticulé, la nervure circonférentielle interne s'étendant autour de la circonférence du logement moulé d'une seule pièce.

9. Enceinte de confinement (51) selon l'une quelconque des revendications précédentes, dans laquelle le logement moulé d'une seule pièce (52) comporte une paire de protubérances internes sensiblement diamétralement opposées (525a, 525b) pour la fixation d'un dispositif de retenue d'appât.

10. Enceinte de confinement (51) selon l'une quelconque des revendications précédentes, dans laquelle la surface du logement moulé d'une seule pièce (52) est perforée sensiblement régulièrement.

11. Ensemble de piégeage marin, comprenant :
une enceinte de confinement (51) telle que définie dans l'une quelconque des revendications précédentes ; et
un matériau de confinement réticulé fixé à des parties de la surface du logement moulé d'une seule pièce (52).

12. Outil de moulage comprenant une cavité de moule conformée pour fabriquer une enceinte de confinement (51) telle que définie dans l'une quelconque des revendications 1 à 10.
